(19) **Europäisches Patentamt**

**European Patent Office**

**Office européen des brevets**

(11) **EP 0 643 502 B1**

(12) **FASCICULE DE BREVET EUROPEEN**

(45) Date de publication et mention
de la délivrance du brevet:
**28.06.2000 Bulletin 2000/26**

(51) Int. Cl.7: **H04J 3/07**

(21) Numéro de dépôt: **94402003.1**

(22) Date de dépôt: **08.09.1994**

(54) **Dispositif de filtrage de gigue de déjustification positive d'un train numérique et application au filtrage de gigue de déjustification positive et positive-négative d'un train numérique**

Anordnung zur Filterung des Phasenzitterns wegen Entfernen positiver Stopfbits und Anwendung zur Filterung des Phasenzitterns wegen Entfernen positiver und negativer Stopfbits einer digitalen Impulsfolge

Circuit for filtering the jitter of positive stuffing in a digital bitstream and the application for filtering the jitter of positive and negative stuffing in a digital bitstream

(84) Etats contractants désignés:
**AT BE CH DE ES FR GB IT LI NL SE**

(30) Priorité: **10.09.1993 FR 9310822**
**20.10.1993 FR 9312496**

(43) Date de publication de la demande:
**15.03.1995 Bulletin 1995/11**

(73) Titulaire: **ALCATEL**
**75008 Paris (FR)**

(72) Inventeurs:
• **Etienne, Jean-Paul**
**F-22700 Saint Quay-Perros (FR)**
• **Jeandot, Jean-Louis**
**F-91470 Limours (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 473 338        EP-A- 0 481 847**
**WO-A-93/16536**

## Description

La présente invention concerne d'une manière générale la transmission numérique.

La présente invention concerne plus particulièrement le filtrage de la gigue dite de déjustification d'un train numérique, c'est-à-dire de la gigue due à l'élimination, en réception de ce train, d'éléments binaires dits de justification, introduits au cours de la formation de ce train et permettant d'adapter le rythme d'un train numérique non justifié, à transmettre, au rythme offert pour sa transmission.

La présente invention est plus particulièrement applicable au cas de trains numériques utilisant, pour leur formation, la technique dite de justification positive dont on rappelle qu'elle est utilisée dans le cas où le rythme du train numérique non justifié à transmettre a une valeur nominale inférieure à celle du rythme offert pour sa transmission.

La présente invention est ainsi applicable au cas d'adaptation de rythme effectuée dans un réseau de transmission plésiochrone.

La présente invention est ainsi également applicable au cas d'adaptation de rythme effectuée à l'entrée d'un réseau de transmission synchrone et notamment d'un réseau de transmission synchrone sur lequel sont transmis des trains numériques formés suivant la hiérarchie de multiplexage synchrone telle que définie dans les recommandations G7O7, G708, G709 du CCITT.

Il est connu, pour restituer, en réception, le rythme d'un train numérique non justifié, à partir d'un train numérique justifié suivant la technique de justification positive, après élimination de ce dernier de ses éléments binaires de justification, d'utiliser une boucle à verrouillage de phase permettant d'asservir le rythme de lecture d'une mémoire-tampon dans laquelle est écrit le train numérique incident, après élimination de ses éléments binaires de justification, au rythme d'écriture de cette mémoire-tampon, tout en réalisant un filtrage de type passe-bas.

Un problème se pose, qui est que la gigue due à la déjustification positive comporte des composantes spectrales à très basse fréquence qui ne peuvent pas être éliminées suivant la technique ainsi rappelée.

Le document EP 0481 847 décrit un dispositif de réduction de gigue comportant des moyens pour insérer des sauts de phase de lissage, positifs et négatifs, au voisinage d'un saut de phase dû à la déjustification, le nombre de sauts de phase de lissage positifs étant en moyenne égal à celui des sauts de phase de lissage négatifs.

Le document EP 0 473 338 décrit un dispositif qui a pour fonction de répartir chaque saut de phase de plus d'un bit en plusieurs sauts de phase successifs, ayant une amplitude d'un bit et correspondant à des trames distinctes. C'est un mode de mise en oeuvre du procédé dit de fuite de bits (bit leaking). Ce dispositif comporte des moyens pour estimer l'intervalle entre les sauts de phase d'un bit, en fonction de la moyenne des intervalles entre les ajustements de pointeur. Il ne vise donc pas le même problème que le dispositif revendiqué, qui consiste à lisser chaque saut de phase après application éventuelle du procédé de fuite de bits.

Le document WO-A - 93 16 536 décrit un procédé de lissage de sauts de phase consistant à insérer des sauts de phase positifs périodiquement à une fréquence fixée f1 et des saints de phase négatifs à une autre fréquence f1±df, où df est fonction des ajustements de pointeur (voir page 10, lignes 14-25).

La présente invention a pour but d'apporter une autre solution au problème de filtrage de la gigue de déjustification.

La présente invention a pour objet un dispositif de filtrage de gigue de déjustification positive d'un train numérique, ce dispositif comportant une bouche à verrouillage de phase permettant d'asservir le rythme d'un signal représentatif du rythme de lecture d'une mémoire-tampon dans laquelle est écrit ledit train numérique, déjustifié, au rythme d'un signal représentatif du rythme d'écriture de cette mémoire-tampon, tout en réalisant un filtrage du type passe-bas, et ce dispositif étant essentiellement caractérisé en ce qu'il comporte en outre des moyens dits premiers moyens pour déterminer le taux réel de justification dudit train numérique et pour en déduire la différence, dite taux de justification différence, $T_d$, entre ce taux réel et un taux de justification dit nominal, $T_n$, de ce train numérique, et des moyens dits seconds moyens pour:

- supprimer systématiquement les sauts de phase, dus à la déjustification positive, dudit signal représentatif du rythme d'écriture de la mémoire-tampon,
- regénérer des sauts de phase de ce signal, en nombre correspondant audit taux de justification nominal,
- regénérer des sauts de phase de ce signal, en nombre correspondant audit taux de justification différence, et avec lissage de ces sauts de phase.

La présente invention a également pour objet l'application d'un tel dispositif au filtrage de la gigue de déjustification d'un train numérique utilisant pour sa formation, et à des niveaux différents, la technique de justification positive et la technique de justification positive-négative, et notamment au filtrage de la gigue de déjustification d'un train numérique transmis à travers un réseau de transmission synchrone et utilisant, pour sa formation, ces deux techniques de justification, la première étant mise en oeuvre à l'entrée de ce réseau, et la seconde à l'intérieur de ce réseau.

D'autres objets et caractéristiques de la présente invention apparaîtront à la lecture de la description suivante d'exemples de réalisation, faite en relation avec les dessins ci-annexés dans lesquels :

- la figure 1 est un schéma d'un dispositif suivant la présente invention,
- la figure 2 est un diagramme destiné à illustrer le fonctionnement du dispositif illustré sur la figure 1,
- la figure 3 est un schéma destiné à illustrer l'application d'un dispositif suivant la présente invention, au filtrage de la gigue de déjustification d'un train numérique utilisant pour sa formation, et à des niveaux différents, deux techniques de justification, l'une, dite positive, et l'autre, dite positive-négative,
- la figure 4 est un diagramme destiné à illustrer le fonctionnement du dispositif illustré sur la figure 3,
- la figure 5 est le schéma d'une variante de réalisation du dispositif selon l'invention,
- les figures 6 à 9 sont quatre graphes illustrant le fonctionnement de cette variante.

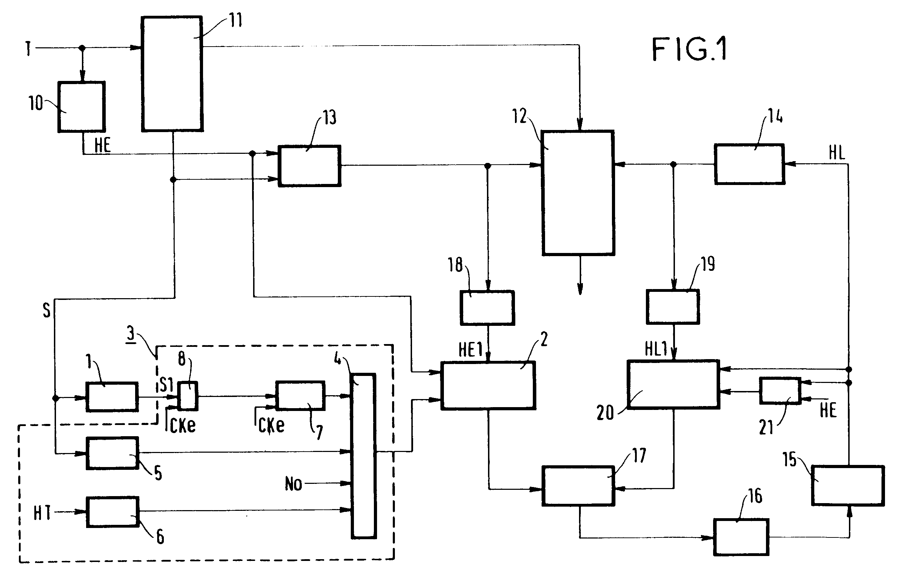

Le dispositif illustré sur la figure 1 est destiné à filtrer la gigue de déjustification positive d'un train numérique incident, noté T.

On rappelle que, suivant la technique de justification positive, des emplacements temporels de ce train, prévus pour des éléments binaires dits d'information sont, de temps à autre, remplacés par des éléments binaires de justification (ou de bourrage), ces remplacements étant indiqués par des éléments binaires dits d'indication de justification positive.

Le train numérique incident est préalablement traité, suivant des principes connus et non rappelés ici, pour:

- en extraire, par un circuit noté 10, un signal de rythme, noté HE, donnant son rythme d'arrivée,
- en éliminer, par un circuit noté 11, les éléments binaires autres que des éléments binaires d'information, et notamment les éléments binaires de justification et les éléments binaires d'indication de justification.

Ces éléments binaires d'information sont, également de façon connue, écrits dans une mémoire-tampon, notée 12, à des adresses fournies par un compteur d'adressage-écriture, 13, incrémenté par le signal de rythme HE seulement lorsqu'il y est autorisé par un signal issu du circuit 11 et constitué par un signal dit d'indication de justification positive noté S formé à partir desdits éléments binaires d'indication de justification positive.

Ces éléments binaires d'information sont, également de façon connue, lus dans la mémoire-tampon 12, à des adresses fournies par un compteur d'adressage-lecture, 14, incrémenté par un signal de rythme noté HL issu d'une boucle à verrouillage de phase.

Cette boucle à verrouillage de phase comporte, également de façon connue, un oscillateur commandable 15 fournissant ce signal de rythme HL, et commandé par le signal de sortie d'un filtre passe-bas, 16, recevant lui-même le signal de sortie d'un comparateur de phase, 17, donnant le déphasage entre des signaux représentatifs des rythmes d'écriture et de lecture de la mémoire-tampon.

Le dispositif illustré sur la figure 1 comporte en outre un détecteur d'états de comptage 18 et un détecteur d'états de comptage 19, permettant de détecter des états de comptage prédéterminés du compteur d'adressage-écriture 13 et du compteur d'adressage-lecture 14, avantageusement au nombre d'un seul par cycle d'adressage de la mémoire-tampon (en vue d'éviter d'appliquer plusieurs sauts de phase à la boucle à verrouillage de phase au cours d'un même cycle d'adressage de la mémoire-tampon). Ces détecteurs d'états de comptage fournissent en l'occurrence lesdits signaux représentatifs des rythmes d'écriture et de lecture, ces signaux, notés respectivement HE1 et HL1, présentant des impulsions au moment du passage desdits compteurs d'adressage-écriture et d'adressage-lecture par lesdits états de comptage prédéterminés.

Le dispositif illustré sur la figure 1 comporte en outre des moyens dits premiers moyens, notés 1, pour déterminer le taux réel de justification du train numérique incident et pour en déduire la différence, dite taux de justification différence, Td, entre ce taux de justification réel et un taux de justification dit nominal, Tn.

Un exemple de réalisation des premiers moyens, 1, est indiqué pour l'exemple d'application d'un dispositif suivant l'invention au filtrage de la gigue de déjustification positive due à l'élimination d'éléments binaires de justification introduits à l'entrée d'un affluent plésiochrone à 140 Mb/s dans un réseau de transmission synchrone sur lequel sont transmis des trains numériques à 155 Mb/s tels que définis dans les recommandations G707, G708, G709 du CCITT.

On rappelle qu'une trame dite STM1 transmise au débit de 155 Mb/s dans un tel réseau se décompose en neuf lignes dans chacune desquelles est donnée une opportunité de justification de l'affluent à 140 Mb/s.

On rappelle en outre que le taux nominal de justification Tn est, dans cette application, égal à $\frac{7}{9}$, et que chacune desdits lignes comporte, outre un emplacement réservé pour un éventuel élément binaire de justification, un emplacement réservé pour un élément binaire d'indication de justification, indiquant si cet emplacement réservé pour un éventuel élément binaire de justification est effectivement occupé par un élément binaire de justification (cas où il est fait usage de l'opportunité de justification), ou par un élément binaire d'information (cas contraire).

Les moyens 1 peuvent alors consister en un décompteur, chargé à la valeur 7 à chaque commencement de trame, et décrémenté par le signal d'indication de justification positive S présentant en l'occurrence une impulsion à chaque fois qu'un élément binaire d'indication de justification indique qu'il est fait usage de l'opportunité de justification.

L'état de ce décompteur à chaque fin de trame est ainsi égal à la différence entre le taux réel de justification et le taux nominal de justification.

Le dispositif illustré sur la figure 1 comporte en outre des moyens dits seconds moyens pour:

- supprimer systématiquement les sauts de phase, dus à la déjustification positive, dudit signal représentatif du rythme d'écriture de la mémoire-tampon,
- regénérer des sauts de phase de ce signal, en nombre correspondant audit taux de justification nominal,
- regénérer des sauts de phase de ce signal, en nombre correspondant audit taux différence, de justification et avec lissage de ces sauts de phase.

Dans l'exemple illustré sur la figure 1, lesdits seconds moyens comportent:

- des moyens pour appliquer audit signal représentatif du rythme d'écriture de ladite mémoire-tampon, un retard obtenu par superposition:

  • d'une séquence de valeurs - N, où N est un nombre positif désignant l'amplitude desdits sauts de phase, les valeurs de cette séquence étant générées de façon à ce qu'elles soient appliquées en coïncidence avec les impulsions dudit signal qui sont affectées par ces sauts de phase,
  • d'une séquence de valeurs +N, les valeurs de cette séquence étant au nombre de Tn.A par période $\frac{1}{F}$, où F désigne la fréquence à laquelle sont déterminés lesdits taux de justification réel et différence, et A désigne le nombre maximum de sauts de phase possibles sur une période $\frac{1}{F}$,
  • de séquences de valeurs variant progressivement de 0 à Td.A.N (avec Td positif ou négatif), chacune de ces séquences étant générée lorsqu'un taux de justification différence non nul est déterminé,
  • d'une valeur dite nominale, No, déterminée de façon à ce que la valeur résultant de ladite superposition ne devienne pas négative dans le cas de valeurs Td consécutives négatives,

- des moyens pour appliquer aux impulsions dudit signal représentatif du rythme de lecture de ladite mémoire-tampon, un retard constant, noté Mo, tel que Mo x TL= No x TE où TL et TE désignent respectivement la période du signal de rythme de lecture et la période du signal de rythme d'écriture de ladite mémoire-tampon.

Dans l'exemple illustré sur la figure 1, lesdits moyens pour appliquer un retard audit signal représentatif du rythme d'écriture de la mémoire-tampon, constitué en l'occurrence par le signal HE1, comportent un décompteur, 2, qui effectue un décomptage à partir de valeurs dites de chargement fournies par des moyens, notés 3, pour déterminer ces valeurs de chargement, ledit décomptage étant déclenché par les impulsions du signal HE1 et étant effectué au rythme du signal HE.

Les moyens 3 pour déterminer lesdites valeurs de chargement comportent un additionneur, 4, qui reçoit en l'occurrence:

- sur une première entrée une séquence de valeurs - 1 (la valeur N étant en effet en l'occurrence égale à la valeur 1) générée par un générateur 5 commandé par le signal S d'indication de justification positive, les valeurs de cette séquence étant générées de façon à ce qu'elles soient appliquées en coïncidence avec les impulsions du signal HE1 qui sont affectées par les sauts de phase dus à la justification positive,
- sur une deuxième entrée une séquence de valeurs +1, générée par un générateur 6 commandé par un signal de rythme noté HT, donnant le rythme des trames STM1, les valeurs de cette séquence étant en l'occurrence au nombre de 7 par période de trame STM1,
- sur une troisième entrée des séquences de valeurs variant progressivement de 0 à Td x 9, avec Td positif ou négatif, générées par un filtre numérique 7, chacune de ces séquences étant générée à chaque fois qu'un taux de justification différence Td non nul est déterminé,
- sur une quatrième entrée ladite valeur nominale, No.

**[0032]** Dans le cas où le même signal S est appliqué au compteur d'adressage-écriture 13 et au générateur 5, pour que les valeurs de la séquence générée par le générateur 5 soient bien appliquées en coïncidence avec les impulsions du signal HE1 qui sont affectées par les sauts de phase dus à la déjustification positive, l'application du signal S au compteur d'adressage-écriture 13 sera retardée par rapport à l'application de ce même signal au générateur 5.

Le filtre numérique 7 reçoit, à travers un convertisseur analogique-numérique, 8, un signal noté S1, dit d'indication de taux de justification différence, et issu des moyens 1.

Ce signal d'indication de taux de justification différence pourra par exemple être constitué de deux signaux dits en impulsions présentant l'un une impulsion à chaque fois qu'un taux de justification différence positif est déterminé, l'autre une impulsion à chaque fois qu'un taux de justification négatif est déterminé.

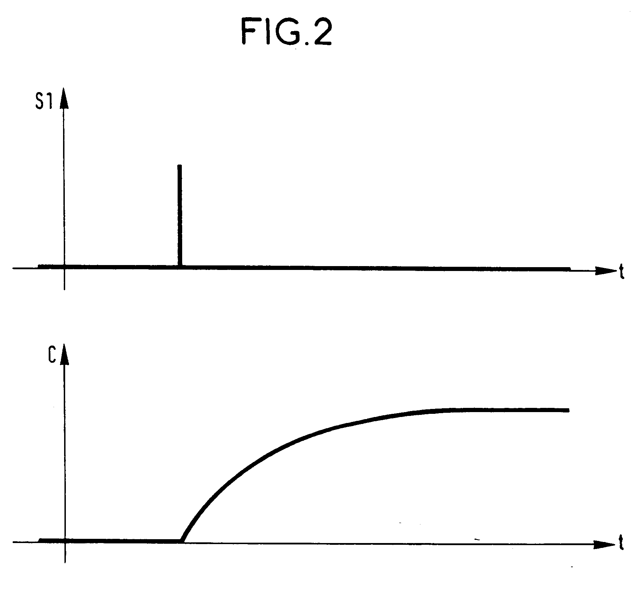

Le filtre numérique 7 fournit, en réponse à une telle impulsion, une série de valeurs variant progressivement de 0 à Td x 9, par exemple exponentiellement dans le cas d'un filtre, en l'occurrence passe-bas, du premier ordre, comme illustré sur la figure 2 où l'on a noté C le signal analogique correspondant au signal numérique obtenu en sortie de ce filtre.

Le convertisseur analogique-numérique 8 et le filtre numérique 7 reçoivent en outre un signal dit d'horloge d'échantillonnage, noté CKe, de fréquence en l'occurrence supérieure à deux fois la fréquence maximale des impulsions du signal S1, et inférieure ou égale à la fréquence dite nominale (c'est-à-dire en l'absence de sauts de phase) du signal HE1.

Ladite valeur nominale No sera déterminée, compte tenu de la bande passante du filtre numérique 7 et du nombre maximum de fois consécutives où un taux de justification de signe négatif peut être obtenu, pour que la valeur résultant de ladite superposition ne devienne pas négative.

Dans l'exemple de réalisation illustré sur la figure 1, les moyens, notés 20, pour appliquer aux impulsions du signal représentatif du rythme de lecture de la mémoire-tampon un retard constant et égal à Mo comportent un décompteur déclenché par le signal HL1, décrémenté par le signal de rythme HL, et recevant par ailleurs d'un circuit de calcul noté 21 la valeur de chargement Mo telle que No x TE= Mo x TL où Te désigne la période du signal de rythme HF et où TL désigne la période du signal de rythme HL, le circuit 21 recevant par conséquent les signaux HE et HL pour élaborer cette valeur Mo.

Le signal issu du décompteur 2 constitue l'un des signaux appliqués au comparateur de phase 17.

L'autre signal appliqué au comparateur de phase 17 est obtenu en sortie du décompteur 20.

L'ensemble formé par le décompteur 2 et par les moyens 3 permettant de fixer la valeur de chargement de ce décompteur permet ainsi de filtrer les composantes à très basse fréquence de la gigue due à la déjustification positive du train numérique incident, les autres composantes, de fréquence plus élevée, étant éliminées de façon classique par le filtre passe-bas 16 de la boucle à verrouillage de phase.

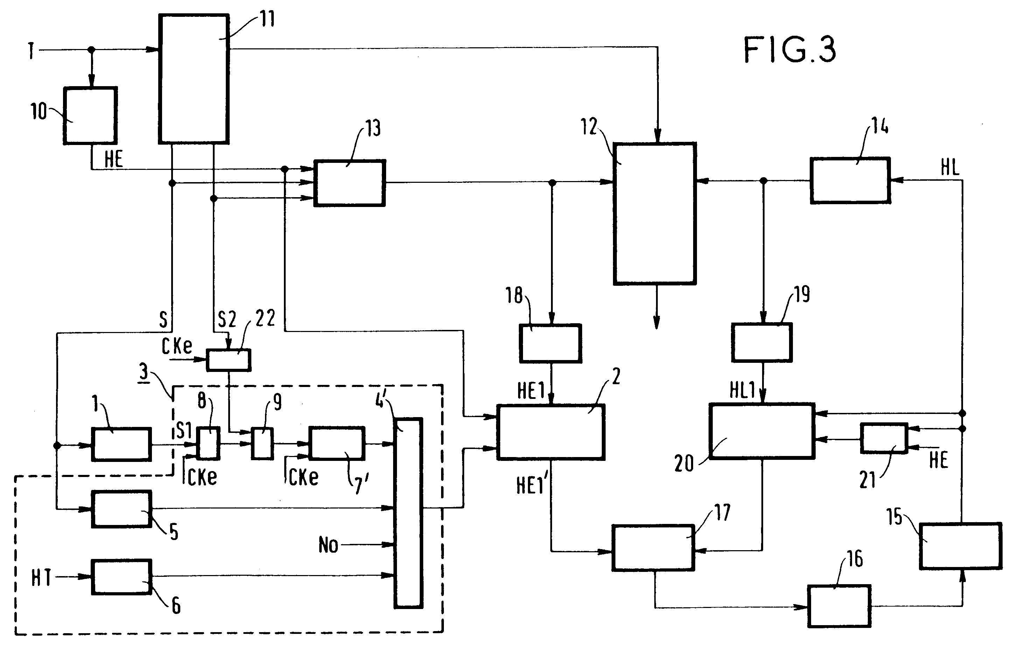

Un exemple d'application d'un dispositif suivant la présente invention, au filtrage de la gigue de déjustification d'un train numérique utilisant, pour sa formation, et à des niveaux différents, deux techniques de justification, l'une dite positive, et l'autre dite positive-négative est maintenant décrit en relation avec la figure 3.

Le dispositif illustré sur la figure 3 diffère de celui illustré sur la figure 1 en ce qu'il comporte en outre:

- des moyens dits de retard pour appliquer aux impulsions du signal HE1 un retard qui, en présence d'un saut de phase dû à la déjustification positive-négative, devient instantanément, pour l'impulsion du signal HE1 affectée par ce saut de phase, égal à +N' ou à -N' suivant que ledit saut de phase a une amplitude égale à -N' ou une amplitude égale à +N', où N' désigne un nombre positif, puis, pour un ensemble d'impulsions suivantes, varie progressivement, suivant le cas de +N' à O ou de -N' à 0,

- des moyens, commandés par un signal dit d'indication de justification positive-négative, noté S2, pour déterminer les valeurs de retard à appliquer à ces moyens de retard.

Dans l'exemple illustré sur la figure 3, les moyens dits de retard sont constitués par les mêmes moyens de retard 2 que sur la figure 1, et les moyens pour déterminer lesdites valeurs de retard comportent un filtre numérique, noté 7', qui reçoit, via un convertisseur analogique-numérique noté 10, ledit signal S2 d'indication de justification positive-négative, constitué, par exemple, dans le cas d'un train numérique formé suivant la hiérarchie de multiplexage synchrone telle que définie dans les recommandations G707, G708, G709 du CCITT, par un signal dit d'indication d'ajustement de pointeur.

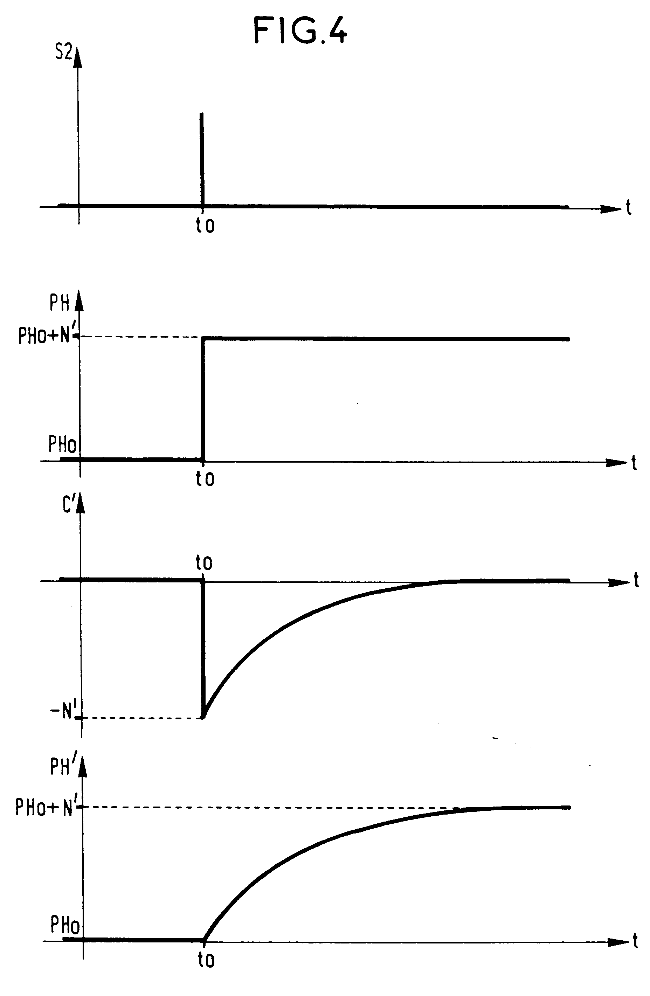

On a illustré sur la figure 4 un exemple de forme possible pour le signal S2, d'indication de sauts de phase dus à la déjustification positive-négative.

Dans cet exemple ce signal S2 présente des impulsions aux instants, tels que to, pour lesquels se produit un saut de phase et pourra être en fait constitué de deux tels signaux présentant l'un des impulsions en cas de sauts de phase positifs, l'autre des impulsions en cas de sauts de phase négatifs.

On a également illustré sur la figure 4 un signal, noté PH, indiquant la phase du signal de rythme HE1, ce signal PH ayant une forme dite en échelons, les changements de valeurs desdits échelons se produisant, pour ce qui est de la déjustification positive-négative, aux instants tels que to mentionnés plus haut. A titre d'exemple le cas d'un saut de phase d'amplitude égal à +N' est illustré sur la figure 4, portant la phase du signal PH d'une valeur PHo (avant l'instant to) à une valeur PHo+N' (après l'instant to).

On a également illustré sur la figure 4 un signal, noté C', constitué par le signal analogique correspondant au signal numérique obtenu, pour le seul cas de déjustification positive-négative, en sortie du filtre numérique 7', à titre d'exemple dans le cas où ce filtre est un filtre du premier ordre, et plus particulièrement, dans l'exemple considéré où le signal S2 est un signal du type en impulsions, un filtre passe-bas du premier ordre. On notera que dans le cas où le signal S2 serait un signal du type en échelons, il s'agirait d'un filtre passe-haut.

La fonction de transfert du filtre numérique 7' est déterminée pour qu'à un instant tel que to où se produit un saut de phase, le filtre numérique 7' fournisse une valeur égale à -N'dans le cas (plus particulièrement illustré sur la figure 4) d'un saut de phase d'amplitude égale +N', ou à +N'dans le cas d'un saut de phase d'amplitude égale à -N'.

Dans ces conditions l'impulsion du signal de rythme HE1' obtenue en sortie du décompteur 2, correspondant à l'impulsion du signal de rythme HE1 qui est affectée par le saut de phase considéré, n'est pas affectée par ce saut de phase, comme illustré sur la figure 4 où l'on voit que la phase, notée PH', du signal de rythme HE1' ne présente pas de discontinuité à l'instant to.

Le saut de phase ainsi annulé est ensuite regénéré de façon progressive. La fonction de transfert du filtre numérique 7' est en effet déterminée en outre pour que ce filtre numérique fournisse à partir de l'instant to, et à titre d'exemple pour le cas d'un saut de phase d'amplitude égale à +N', une séquence de valeurs, notées N'i, du type -N'+n'i, avec n'i positif, croissant avec le rang i de la valeur dans cette séquence, de façon à ce que ces valeurs tendent vers la valeur 0, en l'occurrence exponentiellement dans le cas illustré sur la figure 4. La phase PH' du signal de rythme HE1' croît alors, avec la même variation exponentielle, vers la valeur PHo+N'.

Dans cet exemple illustré sur la figure 3, le filtre numérique 7' est également utilisé pour fournir les séquences de valeurs variant progressivement de 0 à Td.A.N générées à chaque fois qu'un taux de justification différence non nul est déterminé, et il est alors nécessaire de munir l'additionneur, noté alors 4', d'une cinquième entrée qui reçoit une séquence de valeurs + Td x 9 (ou plus généralement + Td.A.N) générées à chaque fois qu'un taux de justification différence non nul est déterminé, cette cinquième entrée de l'additionneur 4' étant à cette fin reliée à la sortie des moyens 1.

Dans cet exemple, le filtre numérique 7' reçoit alors le signal issu d'un additionneur, 9, recevant d'une part, via le convertisseur-analogique numérique 8, le signal S1 d'indication de taux de justification différence, et d'autre part, via le convertisseur analogique-numérique 10, le signal S2 d'indication de justification positive-négative.

Les convertisseurs analogique-numérique 8 et 10 et le filtre numérique 7' reçoivent en outre un signal dit d'horloge d'échantillonnage, noté CKe, de fréquence en l'occurrence supérieure à deux fois la fréquence maximale d'apparition des impulsions des signaux S1 et S2, et inférieure ou égale à la fréquence nominale du signal de rythme HE1.

Le filtre numérique 7' peut être un filtre classique à bande passante fixe, et comportant deux étages : un premier étage constituant un filtre passe-bas du premier ordre et un second étage constituant un filtre passe-haut du premier ordre. L'ensemble des deux étages constitue alors un filtre passe-haut. Le filtre 7' associé à la mémoire tampon 12 et au comparateur de phase 17 réalise un filtrage passe-bas tendant à éliminer la gigue de phase. Un filtre 7' de réalisation classique est suffisant pour éliminer la gigue de phase dans la bande 200 Hz à 3,5 MHz, pour une amplitude fixée et pour un type de séquence de justification fixé. Cependant, dans certains cas ce filtrage doit être amélioré pour éliminer la gigue à très fréquence, jusqu'à O,O5 Hz par exemple. L'utilisation d'un filtre 7' à bande passante réduite permet d'améliorer le filtrage de la gigue de phase à très basse fréquence mais cela augmente le risque de saturer la mémoire tampon car la réaction du dispositif de déjustification est plus lente lors d'un transitoire, c'est-à-dire au début de chaque séquence de justification.

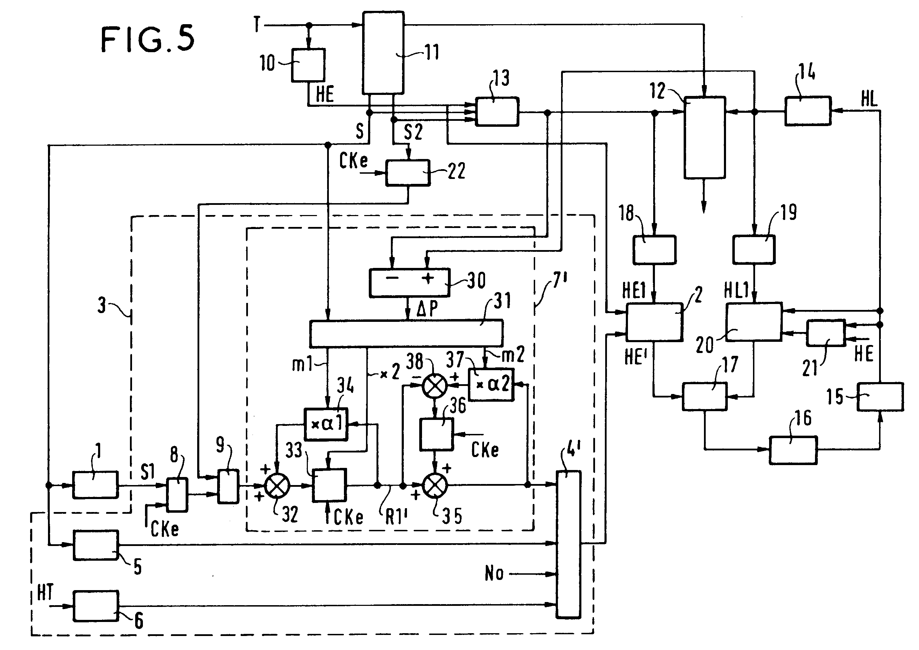

La figure 5 représente le schéma synoptique d'une variante de l'exemple de réalisation représenté sur la figure 3. Seul le filtre 7' est modifié. Au lieu d'être un filtre passe-haut à bande passante fixe, il est à bande passante variable en fonction du remplissage de la mémoire tampon 12. Par exemple, sa bande passante peut prendre quatre valeurs.

Dans l'exemple de réalisation représenté, le filtre 7' comporte :

- un soustracteur 30 ayant deux entrées reliées respectivement aux sorties des pointeurs d'adressage d'écriture 13 et d'adressage de lecture 14;
- un processeur 31 ayant une entrée reliée à la sortie du soustracteur 30 pour recevoir une valeur ΔP qui est la différence entre l'adresse courante d'écriture et l'adresse courante de lecture de la mémoire tampon 12, et une entrée recevant le signal S d'indication de justification positive ou négative;
- un additionneur 32 ayant une première entrée, une seconde entrée, et une sortie; sa première entrée constituant l'entrée du filtre 7' qui est relié à la sortie de l'additionneur 9;
- un multiplieur 34 ayant une entrée reliée à une sortie du processeur 31 pour recevoir une valeur de paramètres m1, et ayant une sortie reliée à la seconde entrée de l'additionneur 32;
- un registre 33 ayant une entrée de données reliée à la sortie de l'additionneur 32, une entrée d'horloge recevant le signal d'horloge CKe, une entrée de commande de décalage reliée à une sortie du processeur 31, et une sortie reliée notamment à une entrée du multiplicateur 34;
- un additionneur 35 ayant une première entrée, une seconde entrée, et une sortie; sa première entrée étant reliée à la sortie du registre 33, et sa sortie constituant la sortie du filtre 7' qui est relié à une entrée de l'additionneur 4';
- un multiplieur 37 ayant une entrée reliée à la sortie de l'additionneur 35, une entrée reliée à une sortie du processeur 31 lui fournissant une valeur de paramètres m2, et ayant une sortie;
- un soustracteur 38 ayant une entrée "-" reliée à la sortie du registre 33, et une entrée "+" reliée à la sortie du multiplieur 37;
- et un registre 36 ayant une entrée reliée à une sortie du soustracteur 38, et une sortie reliée à la seconde entrée de l'additionneur 35.

Le multiplieur 34 réalise la multiplication de la valeur fournie par la sortie du registre 33 par un coefficient

$$\alpha 1 = 1 - \frac{1}{2^{m1}}$$

Le multiplieur 37 réalise la multiplication de la valeur fournie par la sortie de l'additionneur 35 par un coefficient

$$\alpha 2 = 1 - \frac{1}{2^{m2}}.$$

Pour m1 = m2 = 16, le filtrage de la gigue est obtenu jusqu'à 0,05 Hz. Pour permettre une réaction plus rapide du filtrage lors d'un transitoire, le processeur 31 compare la valeur $\Delta P$ traduisant l'état de remplissage de la mémoire tampon 12, à 3 valeurs de seuil S1, S2, S3, prédéterminées, croissant dans cet ordre. Le processeur 31 fournit les valeurs de paramètres m1, m2 suivantes :

| m1 | m2 | $\Delta P$ |
|----|----|------------|
| 16 | 16 | si $\Delta P < S1$ |
| 14 | 13 | si $S1 \le \Delta P < S2$ |
| 12 | 11 | si $S2 \le \Delta P < S3$ |
| 11 | 10 | si $S3 \le \Delta P$ |

Lors d'un transitoire la valeur $\Delta P$ franchit successivement les valeurs de seuil S1, S2, S3. Le processeur 31 commute sans délai les valeurs m1 et les valeurs m2, lorsque les valeurs de seuil sont franchies. Les valeurs m1 = 11 et m2 = 10 procurent une bande passante du dispositif de justification suffisamment large pour qu'un transitoire ne provoque pas de débordement de la mémoire tampon 12, qui dans cet exemple a une capacité de 128 quartets.

Selon un mode de réalisation préférentiel, le processeur 31 ne décrémente qu'un seul des paramètres m1 et m2 à la fois. Par exemple il modifie les valeurs m1 et m2 conformément au tableau suivant, où S'1, ..., S'6 sont des valeurs de seuil prédéterminées croissant dans cet ordre.

| m1 | m2 | $\Delta P$ |
|----|----|------------|
| 16 | 16 | $\Delta P < S1'$ |
| 14 | 16 | $S1' \le \Delta P < S2'$ |
| 14 | 13 | $S2' \le \Delta P < S3'$ |
| 12 | 13 | $S3' \le \Delta P < S4'$ |
| 12 | 11 | $S4' \le \Delta P < S5'$ |
| 11 | 11 | $S5' \le \Delta P < S6'$ |
| 11 | 10 | $S6' \le \Delta P$ |

Le procédé consistant à changer les valeurs des paramètres m1 et m2 en alternance permet de minimiser la gigue de phase créée par le changement de caractéristiques du filtre 7'. Dans le cas d'un transitoire de forte amplitude, l'écart $\Delta P$ franchit très rapidement plusieurs valeurs de seuil, et le processeur 31 saute plusieurs valeurs de m1 et m2.

Dans un mode de réalisation préférentiel, chaque fois que le processeur 31 diminue la valeur du paramètre m1 de k unités (k entier), il commande simultanément un décalage dans le registre 33 pour diviser par $2^k$ le contenu de ce registre. Ceci a pour effet de diviser par $2^k$ instantanément la valeur R1 fournie par ce premier étage du filtre, et donc de réduire le temps nécessaire pour la stabilisation de la valeur R1 fournie en sortie du premier étage du filtre. En effet, on démontre que cette valeur est proportionnelle à $2^{m1}$. Lorsque m1 est incrémenté d'une unité la valeur fournie par ce premier étage tend asymptotiquement vers une valeur qui est doublée. Le fait de diviser par $2^k$ la valeur fournie par la sortie du premier étage, rapproche beaucoup la valeur fournie de sa valeur finale. La valeur fournie arrive donc plus vite à la valeur finale correspondant à la nouvelle valeur de m1.

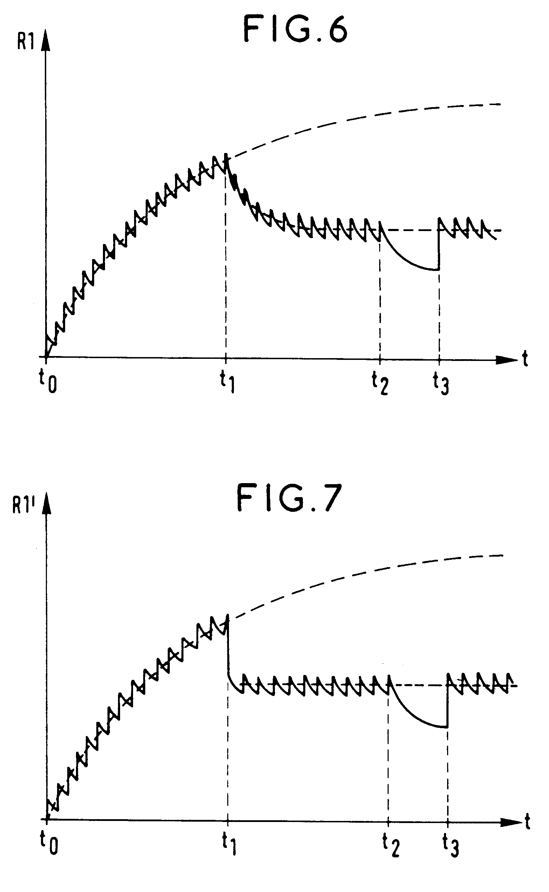

Les figures 6 et 7 illustrent le fonctionnement du premier étage 32, 33, 34 du filtre 7' selon cette variante de réalisation, au moment d'un transitoire.

La figure 6 représente le graphe de la valeur R1 fournie par la sortie du premier étage dans le cas où une décrémentation du paramètre m1 est réalisée sans diviser par deux la valeur fournie par la sortie du premier étage. La figure 7 représente le graphe de la valeur R1' fournie par la sortie du premier étage dans le cas où la valeur R1' est divisée par deux par un décalage dans le registre 33, à l'instant où la valeur m1 est décrémentée.

A l'instant $t_0$ commence une séquence de 87 justifications positives ou négatives, chaque justification se traduisant par une dent de scie ayant un segment de pente positive pratiquement infinie, et un segment de pente négative descendant de manière exponentielle. A l'instant $t_1$ la valeur m1 est incrémentée d'une unité.

Pendant l'intervalle de temps $t_0 t_1$ l'enveloppe du graphe de R1 a une forme exponentielle croissant avec une certaine constante de temps qui est identique pour les deux figures.

Dans le cas représenté sur la figure 6, à l'instant $t_1$ le processeur 31 détecte que l'écart $\Delta P$ est devenu supérieur à une valeur de seuil. Le processeur 31 réduit la valeur m1 d'une unité pour augmenter la bande passante du filtre 7'. La constante de temps est donc réduite. Le graphe de R1 tend alors asymptotiquement vers la même valeur finale résultant du changement de m1, mais avec une pente plus raide. Dans le cas représenté sur la figure 7, la division par deux provoque une diminution brutale de la valeur R1' fournie par le premier étage jusqu'à une valeur très proche de la valeur finale, à quelques pourcents près. La valeur R1' fournie par le premier étage atteint donc plus rapidement un état stable, ce qui réduit la gigue de phase provoquée par le changement de la valeur m1.

Les figures 6 et 7 représentent aussi la variation de la valeur fournie par le premier étage, respectivement la valeur R1 et la valeur R1', entre des instants $t_2$ et $t_3$ entre lesquels il n'y a aucune justification. L'absence de justification se traduit par une diminution des valeurs R1 et R'1. Cette diminution s'arrête au début d'une nouvelle séquence de justifications.

Chaque décrémentation des paramètres m1 et m2 est effectuée par le processeur 31 en phase avec le signal S indiquant une justification, afin de réduire l'erreur due à une division réalisée par un décalage dans le registre 33.

Lorsque l'évènement transitoire qui a augmenté le remplissage de la mémoire 12 est terminé, le processeur 31 détecte que la valeur $\Delta P$ est redevenue inférieure à la plus grande valeur de seuil atteinte pendant le transitoire. Il lance un temporisateur. Quand il constate que cet événement a duré pendant une durée $T_0$, il change alors les valeurs des paramètres m1 et m2 selon une séquence prédéterminée qui est fonction du temps seulement : toutes les $T_1$ secondes il incrémente la valeur d'une unité de m1, puis il incrémente d'une unité la valeur de m2 avec un décalage initial de $\frac{T1}{2}$, puis ensuite à intervalles réguliers de $T_1$ secondes, pour revenir aux valeurs initiales m1 = 16 et m2 = 16, afin de réduire la bande passante du filtre 7'. Le fait de décaler l'incrémentation de m1 et de m2 réduit la gigue de phase produite par le changement de caractéristique du filtre, correspondant à chaque changement de valeur de m1 ou de m2.

L'incrémentation de m1 et m2 est réalisée par pas d'une unité pour minimiser la guigue de phase engendrée par ce changement de paramètre.

Lorsque la valeur de m1 est incrémentée d'une unité, le processeur 31 commande aussi le registre 33 pour réaliser un décalage multipliant par 2 la valeur R1' fournie par la sortie du premier étage du filtre.

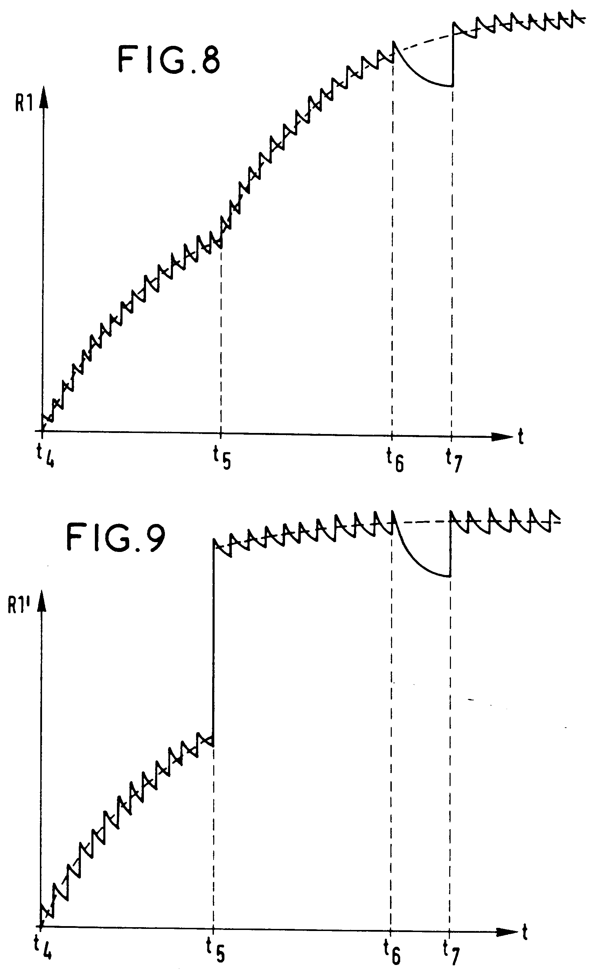

La figure 8 représente le graphe de la valeur R1 fournie par la sortie du premier étage 32, 33, 34 du filtre 7' pendant le retour à l'état stable, en l'absence de décalage dans le registre 33. A l'instant $t_4$ commence une séquence de 87 justifications positives ou négatives. A l'instant $t_5$ la valeur m1 est décrémentée d'une unité. Pendant l'intervalle de temps $t_4 t_5$ l'enveloppe du graphe de R1 a une forme exponentielle croissant avec une certaine constante de temps. Après l'instant t5 elle a une forme exponentielle décroissant avec une pente plus raide. Le graphe tend alors asymptotiquement vers la même valeur finale mais avec une pente plus raide.

La figure 9 représente le graphe de la valeur R'1 fournie par la sortie du premier étage 32, 33, 34 du filtre 7' pendant ce retour à l'état stable, mais avec un décalage d'un bit dans le registre 33. La multiplication par deux provoque une augmentation de la valeur R1' fournie par le premier étage jusqu'à une valeur très proche de la valeur finale, à quelques pourcents près. La valeur R1' fournie par le premier étage atteint donc plus rapidement un état stable, ce qui réduit la gigue de phase provoquée par le changement de la valeur de m1.

Les figures 8 et 9 représentent aussi la variation de la valeur fournie par le premier étage, respectivement la valeur R1 et la valeur R1', entre des instants $t_6$ et $t_7$ entre lesquels il n'y a aucune justification. L'absence de justification se traduit par une diminution des valeurs R1 et R1' temporairement.

Chaque incrémentation du paramètre m1 est réalisée par le processeur 31 en phase avec l'arrivée du signal S d'indication de justification afin de minimiser les erreurs de calcul lors de la multiplication réalisée par un décalage dans le registre 33. Cette synchronisation permet de prendre pour la multiplication une valeur qui est la plus proche possible de la valeur finale.

Pour la même raison, avant d'incrémenter le paramètre m1 ou m2, le processeur 31 vérifie qu'il n'y a pas eu de trou dans la suite de justifications qui a lieu pendant la période $T_0$ de temporisation. Toutefois il est nécessaire d'assurer que cette vérification ne bloque pas la possibilité d'incrémenter les paramètres m1 et m2 pendant une longue période où il n'y aurait aucune justification, et où la mémoire tampon serait en danger de saturation ou d'assèchement.

Pour assurer cette sécurité, le processeur 31 compare en permanence la valeur $\Delta P$ à une valeur de seuil haute et à une valeur de seuil basse, et déclenche sans délais la décrémentation des paramètres m1 et m2 si l'une de ces valeurs de seuil est franchie. La valeur de seuil haute est fixée à une valeur supérieure à S'6, et la valeur de seuil basse est fixée à une valeur inférieure à S'O, dans cet exemple.

Pour assurer que le filtre ne reste pas avec une bande passante élargie, le processeur 31 lance une temporisation lors de l'arrivée de chaque signal de justification S. Si ce signal disparaît pendant un délai T2 fixé, et s'il n'y a aucun franchissement de seuil pendant ce délai, le processeur 31 commence la séquence des changements de m1 et m2 pour ramener le filtre à l'état initial.

## Revendications

1. Dispositif de filtrage de gigue de déjustification positive d'un train numérique, dispositif comportant une boucle à verrouillage de phase (15, 16, 17) permettant d'asservir le rythme d'un signal représentatif du rythme de lecture d'une mémoire-tampon (12) dans laquelle est écrit ledit train numérique, déjustifié, au rythme d'un signal représentatif du rythme d'écriture de cette mémoire-tampon, tout en réalisant un filtrage du type passe-bas, dispositif **caractérisé** en ce qu'il comporte en outre des moyens dits premiers moyens (1) pour déterminer le taux réel de justification dudit train numérique et pour en déduire la différence, dite taux de justification différence, Td, entre ce taux réel et un taux de justification dit nominal, Tn, de ce train numérique, et des moyens (2, 4, 5, 6, 7) dits seconds moyens pour:

   - supprimer systématiquement les sauts de phase, dus à la déjustification positive, dudit signal représentatif du rythme d'écriture de la mémoire-tampon,
   - regénérer des sauts de phase de ce signal, en nombre correspondant audit taux de justification nominal,
   - regénérer des sauts de phase de ce signal, en nombre correspondant audit taux de justification différence, et avec lissage de ces sauts de phase.

2. Dispositif selon la revendication 1, caractérisé en ce que lesdits seconds moyens comportent:

   - des moyens (2) pour appliquer audit signal représentatif du rythme d'écriture de ladite mémoire-tampon, un retard obtenu par superposition:

     • d'une séquence, générée par un générateur (5), de valeurs - N où N est un nombre positif désignant l'amplitude desdits sauts de phase, les valeurs de cette séquence étant générées de façon à ce qu'elles soient appliquées en coïncidence avec les impulsions dudit signal qui sont affectées par ces sauts de phase,
     • d'une séquence, générée par un générateur (6), de valeurs +N, les valeurs de cette séquence étant au nombre de Tn.A par période $\frac{1}{F}$, où F désigne la fréquence à laquelle sont déterminés lesdits taux de justification réel et différence, et A désigne le nombre maximum de sauts de phase possibles sur une période,

     • de séquences, générées par un filtre numérique (7), de valeurs variant progressivement de 0 à Td.A.N (avec Td positif ou négatif), chacune de ces séquences étant générée lorsqu'un taux de justification différence non nul est déterminé,
     • d'une valeur dite nominale, No, déterminée de façon à ce que la valeur résultant de ladite superposition ne devienne pas négative dans le cas de valeurs Td consécutives négatives,

   - des moyens (20) pour appliquer aux impulsions dudit signal représentatif du rythme de lecture de ladite mémoire-tampon, un retard constant, noté Mo, tel que Mo x TL= No x TE où TL et TE désignent respectivement la période du signal de rythme de lecture et la période du signal de rythme d'écriture de ladite mémoire-tampon.

3. Dispositif selon l'une des revendications 1 et 2, pour le filtrage de la gigue de déjustification d'un train numérique utilisant, pour sa formation, d'une part la technique de justification positive, et d'autre part la technique de justification positive-négative, caractérisée en ce qu'il est en outre prévu:

   - des moyens dits de retard pour appliquer aux impulsions dudit signal représentatif du rythme d'écriture de la mémoire tampon un retard qui, en présence de saut de phase dû à la déjustification positive-négative, devient instantanément, pour l'impulsion dudit signal représentatif du rythme d'écriture de ladite mémoire-tampon qui est affectée par ce saut de phase, égal à +N' ou à -N' suivant que ledit saut de phase a une amplitude égale à -N' ou une amplitude égale à +N', où N' désigne un nombre positif, puis, pour un ensemble d'impulsions suivantes, varie progressivement, suivant le cas de +N' à 0 ou de -N' à 0,
   - des moyens, commandés par un signal dit d'indication de justification positive-négative, pour déterminer les valeurs de retard à appliquer à ces moyens de retard.

4. Dispositif selon la revendication 3, caractérisé en ce que lesdits moyens pour déterminer lesdites valeurs de retard comportent un filtre numérique qui reçoit un signal d'indication de justification positive-négative, préalablement converti en numérique.

5. Dispositif selon les revendications 2 et 4, caractérisé en ce que lesdits filtres numérique sont constitués par un seul et même filtre numérique (7) qui reçoit un signal issu d'un additionneur (9) recevant d'une part ledit signal d'indication de taux de justification différence préalablement converti en numérique, d'autre part ledit signal d'indication de justification positive-négative préalablement converti en numérique, en ce qu'il est en outre prévu des moyens pour superposer auxdites séquences une séquence de valeurs + Td.A.N, chacune des valeurs de cette séquence étant générée lorsqu'un taux de justification différence non nul est déterminé.

**Claims**

1. Device for filtering positive dejustification jitter of a digital bit stream, said device including a phase-locked loop (15,16,17) for slaving the timing of a signal representative of the read timing of a buffer memory (12) into which said dejustified digital bit stream is written to the timing of a signal representative of the write timing of said buffer memory, whilst applying low-pass filtering, which device is characterized in that it further comprises first means (1) for determining the actual justification rate of said digital bit stream and for deducing therefrom the difference justification rate Td, i.e. the difference between said actual rate and a nominal justification rate Tn of said digital bit stream, and second means (2,4,5,6,7) for:

   - systematically eliminating phase shifts due to positive dejustification from said signal representative of said buffer memory write timing,
   - regenerating phase shifts of said signal in numbers corresponding to said nominal justification rate, and
   - regenerating phase shifts of said signal in numbers corresponding to said difference justification rate and with smoothing of said phase shifts.

2. Device according to claim 1, characterized in that said second means include:

   - means (2) for applying to said signal representative of said buffer memory write timing a time-delay obtained by superposing:

     . a sequence generated by a generator (5) of values -N where N is a positive number denoting the amplitude of said phase shifts, the values of said sequence being generated so that they are applied coincidentally with the pulses of said signal which are affected by said phase shifts,
     . a sequence generated by a generator (6) of values +N, there being Tn.A values in said sequence in each period 1/F, where F denotes the frequency at which said actual justification and difference justification rates are determined and A denotes the maximum number of phase shifts in a period,

     . sequences generated by a digital filter (7) of values varying progressively from 0 to Td.A.N (with Td positive or negative), each of said sequences being generated when a non-null difference justification rate is determined,
     . a nominal value No determined in such a way that the value resulting from said superposition does not become negative in the case of consecutive negative values Td,

   - means (20) for applying to the pulses of said signal representative of said buffer memory read timing a constant time-delay Mo such that Mo x TL = No x TE where TL and TE respectively denote the period of the read timing signal and the period of the write timing signal of said buffer memory.

3. Device according to claims 1 and 2 for filtering the dejustification jitter of a digital bit stream formed using positive justification and positive-negative justification, characterized in that there are further provided:

   - time-delay means for applying to the pulses of the signal representative of the buffer memory write timing a time-delay which, in the presence of a phase shift due to positive-negative dejustification, becomes instantaneously, for the pulse of said signal representative of said buffer memory write timing which is affected by said phase shift, equal to + N' or to -N' according to whether said phase shift has an amplitude equal to -N' or an amplitude equal to +N', where N' denotes a positive number, and then, for a subsequent set of pulses, varies progressively from +N' to 0 or from -N' to 0, respectively,
   - means controlled by a positive-negative justification indication signal to determine the time-delay values to be applied to said time-delay means.

4. Device according to claim 3, characterized in that said means for determining said time-delay values include a digital filter which receives a positive-negative justification indication signal offer it is converted to digital form.

5. Device according to claims 2 and 4, characterized in that said digital filters comprise a single digital filter (7) which receives a signal from an adder (9) receiving said difference justification rate indication signal offer it is converted to digital form and said positive-negative justification indication signal after it is converted to digital form, in that means are additionally provided for superposing on said sequences a sequence of values + Td.A.N, each value of said sequence being generated if a non-null difference justification rate is determined.

**Patentansprüche**

1. Vorrichtung zur Filterung des Phasenzitterns der Positiv-Impulsentstopfung eines digitalen Impulszuges, die eine Phasenkopplungsschleife (15, 16, 17) aufweist, die es erlaubt, den Takt eines Signals zu steuern, das für den Lesetakt eines Pufferspeichers (12) repräsentativ ist, in dem der digitale Impulszug entstopft im Takt eines für den Schreibtakt dieses Pufferspeichers repräsentativen Signals eingetragen wird, wobei eine Filterung vom Tiefpasstyp durchgeführt wird, dadurch gekennzeichnet, dass sie ferner aufweist: sogenannte erste Mittel (1) zum Bestimmen des realen Stopfverhältnisses des digitalen Impulszuges und zum Ableiten daraus der Differenz, als Differenz-Stopfverhältnis Td bezeichnet, zwischen diesem realen Verhältnis und einem sogenannten nominalen Stopfverhältnis Tn dieses digitalen Impulszuges sowie sogenannte zweite Mittel (2, 4, 5, 6, 7) zum:

   - systematischen Unterdrücken der durch die Positiv-Entstopfung verursachten Phasensprünge des für den Schreibtakt des Pufferspeichers repräsentativen Signals,
   - Wiederherstellen der Phasensprünge dieses Signals in einer Anzahl entsprechend dem nominalen Stopfverhältnis,
   - Wiederherstellen der Phasensprünge dieses Signals in einer Anzahl entsprechend dem Differenz-Stopfverhältnis mit Glättung dieser Phasensprünge.

2. Vorrichtung nach Anspruch 1, dadurch gekennzeichnet, dass die zweiten Mittel aufweisen:

   - Mittel (2), um auf das für den Schreibtakt des Pufferspeichers repräsentative Signal eine Verzögerung anzuwenden, die erhalten wird durch Überlagern:

      • einer durch einen Generator (5) erzeugten Folge von Werten -N, wobei N eine positive Zahl ist, die die Amplitude der Phasensprünge bezeichnet, und die Werte dieser Folge so erzeugt werden, dass sie in Koinzidenz mit den Impulsen des Signals angewendet werden, die von diesen Phasensprüngen betroffen sind,

      • einer von einem Generator (6) erzeugten Folge von Werten +N, wobei die Werte dieser Folge in der Anzahl Tn.A pro Periode 1/F vorhanden sind, wobei F die Frequenz bezeichnet, bei der das reale Stopfverhältnis und das Differenz-Stopfverhältnis bestimmt werden, und A die maximale Zahl von in einer Periode möglichen Phasensprüngen bezeichnet,

      • von durch ein digitales Filter (7) erzeugten Folgen von Werten, die progressiv von Null bis Td.A.N variieren (wobei Td positiv oder negativ ist), wobei jede dieser Folgen erzeugt wird, wenn ein nicht verschwindendes Differenz-Stopfverhältnis bestimmt wird,

      • eines sogenannten Nominalwertes No, der so bestimmt wird, dass der aus der Überlagerung resultierende Wert im Fall von aufeinanderfolgenden negativen Werten Td nicht negativ wird,

   - Mittel (20) zum Anwenden einer mit Mo bezeichneten konstanten Verzögerung auf die Impulse des für den Lesetakt des Pufferspeichers repräsentativen Signale, derart, dass Mo x TL = No x Te, wobei TL und TE jeweils die Periode des Lesetaktsignals und die Periode des Schreibtaktsignals des Pufferspeichers bezeichnen.

3. Vorrichtung nach Anspruch 1 oder 2 zum Filtern des Phasenzitterns der Impulsentstopfung eines digitalen Impulszuges, der zu seiner Erzeugung einerseits die Positiv-Stopftechnik und andererseits die Positiv-Negativ-Stopftechnik verwendet, dadurch gekennzeichnet, dass ferner vorgesehen sind:

   - sogenannte Verzögerungsmittel, um auf die Impulse des für den Schreibtakt des Pufferspeichers repräsentativen Signals eine Verzögerung anzuwenden, die in Anwesenheit eines Phasensprunges aufgrund der Positiv-Negativ-Entstopfung instantan für den Impuls des für den Schreibtakt des Pufferspeichers repräsentativen Signals, der von diesem Phasensprung betroffen ist, gleich +N' oder gleich -N' ist, je nachdem, ob der Phasensprung eine Amplitude gleich -N' oder eine Amplitude gleich +N' hat, wobei N' eine positive Zahl bezeichnet, und die für eine Gesamtheit von nachfolgenden Impulsen progressiv, je nach Fall, von +N' bis Null oder von -N' bis Null variiert,
   - durch ein sogenanntes Positiv-Negativ-Stopfanzeigesignal gesteuerte Mittel zum Bestimmen der auf diese Verzögerungsmittel anzuwendenden Verzögerungswerte.

**4.** Vorrichtung nach Anspruch 3, dadurch gekennzeichnet, dass die Mittel zum Bestimmen der Verzögerungswerte ein digitales Filter umfassen, das ein zuvor digitalisiertes Positiv-Negativ-Stopfanzeigesignal empfängt.

**5.** Vorrichtung nach den Ansprüchen 2 und 4, dadurch gekennzeichnet, dass die digitalen Filter durch ein einziges und gleiches digitales Filter (7) gebildet sind, das ein von einem Addierer (9) ausgegebenes Signal empfängt, der einerseits das zuvor digitalisierte Differenz-Stopfverhältnis-Anzeigesignal und andererseits das zuvor digitalisierte Positiv-Negativ-Stopfanzeigesignal empfängt, und dass ferner Mittel vorgesehen sind, um den Folgen eine Folge von Werten +Td.A.N zu überlagern, wobei jeder der Werte dieser Folge erzeugt wird, wenn ein nicht verschwindendes Differenz-Stopfverhältnis bestimmt wird.

FIG.1

EP 0 643 502 B1

# FIG.2

FIG.3

# FIG.4

# FIG.5

# FIG.6

# FIG.7

# FIG.8

R1

t₄  t₅  t₆  t₇  t

# FIG.9

R1'

t₄  t₅  t₆  t₇  t